# EUROPÄISCHE PATENTSCHRIFT

(11) **EP 0 776 580 B1**
(45) Veröffentlichungstag und Bekanntmachung des Hinweises auf die Patenterteilung: **08.12.1999**
(21) Anmeldenummer: 95927654.4
(22) Anmeldetag: 10.08.1995
(51) Int. Cl.: H04Q 3/545

(54) **VERFAHREN ZUR SPEICHERPLATZBERECHNUNG EINER KOMMUNIKATIONSANLAGENKONFIGURATION**
PROCESS FOR CALCULATING THE STORAGE CAPACITY OF A COMMUNICATION SYSTEM CONFIGURATION
PROCEDE DE CALCUL DE LA CAPACITE DE MEMOIRE D'UNE CONFIGURATION D'UN SYSTEME DE COMMUNICATION

(30) Priorität: 17.08.1994 DE 4429120
(43) Veröffentlichungstag der Anmeldung: 04.06.1997
(73) Patentinhaber: SIEMENS AKTIENGESELLSCHAFT, 80333 München (DE)
(72) Erfinder: BECKMANN, Klaus, D-42579 Heiligenhaus (DE); KARNATZ, Hans-Jürgen, D-58730 Fröndenberg (DE)
(86) Internationale Anmeldenummer: DE9501060
(87) Internationale Veröffentlichungsnummer: WO9605705

(56) Entgegenhaltungen:
- EP-A- 0 525 432
- DE-A- 3 130 191
- DE-A- 3 626 793
- IEEE GLOBAL TELECOMMUNICATIONS CONFERENCE, Bd. 1, 29.November 1993 - 2.Dezember 1993 HOUSTON (US), Seiten 357-361, XP 000428082 MOSHE ROZENBLIT 'O,A & M Capabilities for switching software management'
- MICROSOFT CORPORATION 'Getting started Microsoft Office - Chapter 2 - Installing Microsoft Office on a Network' 1992 , MICROSOFT CORPORATION , IRELAND siehe Seite 12, Zeile 29 - Zeile 31
- PATENT ABSTRACTS OF JAPAN vol. 10 no. 266 (P-496) ,11.September 1986 & JP,A,61 091748 (ONISHI SOICHI) 9.Mai 1986,
- THE SECOND INTERNATIONAL CONFERENCE ON COMPUTERS AND APPLICATIONS, 23. - 27.Juni 1987 BEIJING (CH), Seiten 51-56, J.A. KUKLA ET AL 'A Highly Reliable DBMS for the 5ESS Switching System'
- TELCOM REPORT, Bd. 9, Nr. 1, Januar 1986 BERLIN (DE), Seiten 22-26, A.D. LEICHUM ET AL 'Behandlung der Datenbasis bei der Inbetriebnahme und bei Erweiterungen von EWSD-Vermittlungsstellen'
- INTERNATIONAL SWITCHING SYMPOSIUM, Bd. 3, 15. - 20.März 1987 PHOENIX (US), Seiten 716-721, JC. LEMONNIER ET AL 'Industrial Manufacturing of the Alcatal Software'
- AT&T TECHNICAL JOURNAL, Bd. 64, Nr. 1, Januar 1985 NEWYORK (US), Seiten 213-228, H.K. WOODLAND ET AL 'System 75 : System Management'

## Beschreibung

Moderne Kommunikationsanlagen bieten einem Telekommunikationsteilnehmer aufgrund ihrer software- sowie hardwaremäßigen Ausgestaltungsmöglichkeiten eine Vielzahl von Leistungsmerkmalen. Diese Leistungsmerkmale können softwaremäßig durch einzelne Programmprozeduren oder modifizierte Programmpakete in die Kommunikationsanlage integriert werden. Zusatzliche die Multifunktionalitat der Kommunikationsanlage erweiternde Maßnahmen können durch Auswechslung oder Hinzufügen von auf Steckbaugruppen angeordneten Hardwarekomponenten bewirkt werden. Eine Erweiterung, Veranderung oder Hinzufügung von Leistungsmerkmalen in die Kommunikationsanlage kann ebenso durch an die Kommunikationsanlage anzuschließende Peripherieeinheiten mit den entsprechenden Empfangs-/Sendebaugruppen in der Kommunikationsanlage erreicht werden. Neue Hardwarekomponenten sowie neue Peripherieeinheiten werden vor Inbetriebnahme der Kommunikationsanlage lediglich auf Kompatibilität sowie auf mögliche fehlerhafte Datenübertragungsprozeduren geprüft. Bisher war es üblich, Steckbaugruppen in einen freien oder freiwerdenden Kartensteckplatz in einem Baugruppenträger der Kommunikationsanlage einzufügen, wobei durch eine systemeigene Überwachung in der Kommunikationsanlage erkennbar wurde, ob der zur Verfügung stehende Arbeitsspeicherplatz für die aktuelle Kommunikationanlagenkonfiguration ausreichend ist. Bei dieser Art der Bestückung oder Nach/Umrüstung einer Kommunikationsanlage ist es jedoch von Nachteil, daß es beispielsweise bei einer vollständigen Ausnutzung der freien Kartensteckplätze oder einer einseitigen Überbelegung von Kartensteckplätzen zu Einschränkungen in der Verfügbarkeit von Leistungsmerkmalen bei extremen Belastungssituationen führen kann. Des weiteren ist es bei dieser Art der Bestückung oder Nach-/Umrüstung der Kommunikationsanlage von Nachteil, daß im Laufe der Zeit die verschiedenartigsten Steckbaugruppen oder peripheren Einheiten der Kommunikationsanlage ausgewechselt oder hinzugefügt wurden, ohne eine Dokumentation darüber zu führen. Für einen Servicetechniker ist eine systemgerechte Erweiterung der Anlage aufgrund einer unübersichtlich gewordenen Konfiguration der Kommunikationsanlage sehr zeitintensiv.

Aus der Druckschrift IEEE Global Telecommunications Conference, Bd. 1, 29. November 1993 bis 2. Dezember 1993, Houston (US), Seiten 357 bis 361 ist ein Verfahren zur Berechnung einer Speicherplatzauslastung einer rechnergesteuerten Kommunikationsanlage bekannt.

Die der Erfindung zugrundeliegende Aufgabe besteht darin, ein Verfahren zur Konfiguration einer Kommunikationsanlage anzugeben.

Die Lösung dieser Aufgabe ergibt sich aus den Merkmalen des Patentanspruchs 1.

Die Erfindung weist den Vorteil auf, daß beispielsweise vor Inbetriebnahme einer Hardwarekomponente oder eines Leistungsmerkmals in einer Kommunikationsanlage, die Hardwarekomponenten oder das Leistungsmerkmal auf ihre Integrierbarkeit während des Betriebs der Kommunikationsanlage bezüglich eines bereitzustellenden Speicherplatzes überprüft wird.

Eine Weiterbildung der Erfindung besteht darin, daß bezogen auf einen aktuellen Ausbaustand der Kommunikationsanlage die Integrierbarkeit weiterer Hardwarekomponenten oder Leistungsmerkmale sowie Alternativen dafür angezeigt werden können, dies bringt den Vorteil mit sich, daß auftretende Fehler, verursacht durch eine extreme Auslastung bzw. Überlastung der Kommunikationsanlage vor ihrer Inbetriebnahme erkannt werden.

Vorteilhafte Ausbildungen der Erfindung sind in den abhängigen Ansprüchen angegeben.

Weitere Besonderheiten der Erfindung werden aus der nachfolgenden näheren Erläuterung eines Ausführungsbeispiels anhand von Zeichnungen ersichtlich.

Es zeigen dabei:
- Fig. 1: eine schematische Darstellung und
- Fig. 2: ein Ablaufdiagramm.

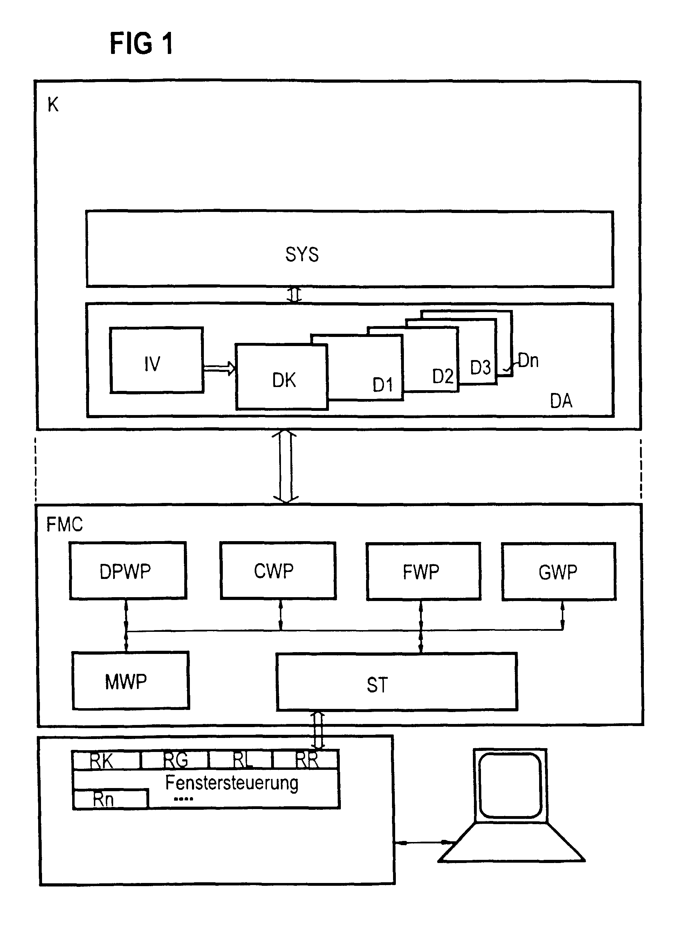

Figur 1 zeigt eine schematische Darstellung eines in eine Kommunikationsanlage K integrierbaren Programmoduls FMC zur Konfiguration einer Kommunikationsanlage K. Dieses Programmodul FMC, ein Free Memory Controller, errechnet beispielsweise den Speicherbedarf für die Gesamtheit der in der Kommunikationsanlage K eingerichteten Leistungsmerkmale oder einen zu reservierenden Speicherplatz für neu in die Kommunikationsanlage K zu integrierende Leistungsmerkmale oder Steckbaugruppen wie beispielsweise den Speicherplatzbedarf einer neu in die Kommunikationsanlage K zu integrierenden Teilnehmeranschlußeinheit. Das Programmodul FMC hat Zugriff auf alle in der Datenbasis DA hinterlegten Konfigurationsdaten der Kommunikationsanlage K. Der besseren systemtechnischen Datenverwaltung sind die Konfigurationsdaten der Kommunikationsanlage K in Rubriken Rn unterteilt. Diese Rubriken Rn gliedern sich in eine Rubrik für Karten RK, in eine Rubrik Gruppe RG, in eine Rubrik RL für Leistungsmerkmale und in eine Rubrik Rufnummer RR auf. Auf Grundlage dieser in der Datenbasis DA abgespeicherten Daten wird durch Programmprozeduren des Programms FMC mit zur Hilfenahme der Systemsoftware SYS der aktuelle Speicherplatzbedarf entweder je Rubrik: Karte RK, Gruppe RG, Leistungsmerkmal RL und Rufnummer RR oder der gesamte Speicherplatzbedarf aller Rubriken Rn ermittelt. Zusätzlich kann, basierend auf den aus der Datenbasis DA abrufbaren Daten beispielsweise vor einer Änderung, einer Ergänzung oder Erweiterung angezeigt werden, was zum Zeitpunkt der Abfrage in welcher Ausbaustufe in der Kommunikationsanlage K beispielsweise noch an Leistungsmerkmalen einrichtbar ist. Eine Menüsteuerung, eine Datenverteilung sowie eine Initialisierung der einzelnen Programmodule wird im wesentlichen durch das Programmodul ST im FMC vorgenommen. Für die Gesamtheit der in der Kommunikationsanlage K integrierten Karten, Leistungsmerkmale, Gruppen sowie Wahlbewertungsgruppen mit den jeweiligen Rufnummern ist im wesentlichen gleich strukturiertes Programmodul DPWP, CWP oder FWP zur Speicherplatzberechnung. Unter einer Karte sind zum Beispiel eine Teilnehmerkarte für analoge-(SLMA) und digitale-(SLMB) Endgräte, sowie Daten von Amtskarten für analoge oder digitale Vermittlungsstellen zusamengefaßt. Unter den Leistungsmerkmalen sind beispielsweise ein Kurzwahl-System, eine individuelle Kurzwahl pro Teilnehmer, Leitungstasten auf digitalem Endgerät, Wecker Funktion, ein Besetztlampenfeld sowie Namenstasten für länderspezifische Ausgestaltungen pro Endgerät zusammengefaßt. Vermittlungsfernsprecher Gruppen, Sammelanschlußgruppen, mehrfach aufliegende Leitung, Bündel von Amtsleitungen, Lautsprecherdurchsagegruppen, Anrufverteilsysteme sowie feste Konferenzgruppen sind unter der Rubrik Gruppe und in der Rubrik Rufnummern sind Wahlbewertungsgruppen mit den jeweiligen Rufnummern zusammengefaßt.

Die Speicherplatzberechnung für einzurichtende Rufnummern sind im Programmodul Dial Plan Window Program DPWP, die einzelnen unter einer Karte zusammengefaßten Varianten werden in dem Card Window Program CWP, die in der Rubrik Leistungsmerkmal zusammengefaßten Daten im Feature Window Program FWP und die unter einer Gruppe zusammengefaßten Ausprägungen einer Kommunikationsanlage im Programm Group Window Program GWP berechnet.

Für die einzelnen Elemente jeder Rubrik existiert in der Kommunikationsanlage K eine Datenstrukturbeschreibung. In dieser Datenstrukturbeschreibung ist festgelegt, welche Datentypen (Integer-Floatzahlen, Bitwerte, Charakterstrings, ...) zu den jeweiligen Kartentypen, Leistungsmerkmalen, Gruppen oder Rufnummern gehören. Auf die Daten, die in den Dateien DK( Daten der unterschiedlichsten Karten), D1, D2,...,Dn der Datenbasis DA abgelegt sind, kann jeweils über das in der Datenbasis DA eingerichtete Inhaltsverzeichnis IV während der Programmprozeduren DPWP, CWP, FWP, GWP des Programmoduls FMC zurückgegriffen werden. Weiterhin stehen dem Programmodul FMC Tabellen, die Maximalwerte der Datenstrukturen beinhalten, zur Verfügung.

In dem Inhaltsverzeichnis IV sind eine der Kommunikationsanlage K entsprechende Anzahl von Einträgen aufgelistet. Pro Eintrag sind dabei im wesentlichen der Namen des Eintrags, die Anfangsadresse für den Zugriff, die Anzahl der Elemente, die maximale Anzahl von Elementen insgesamt, die maximale Anzahl von Elementen in einer verketten Liste sowie die Größe eines Elementes zusammengefaßt.

Die Daten, die in der Datenbasis DA sowie in Maximalwerttabellen abgespeichert sind, bilden die Grundlage der Speicherplatzberechnung des Programmoduls FMC.

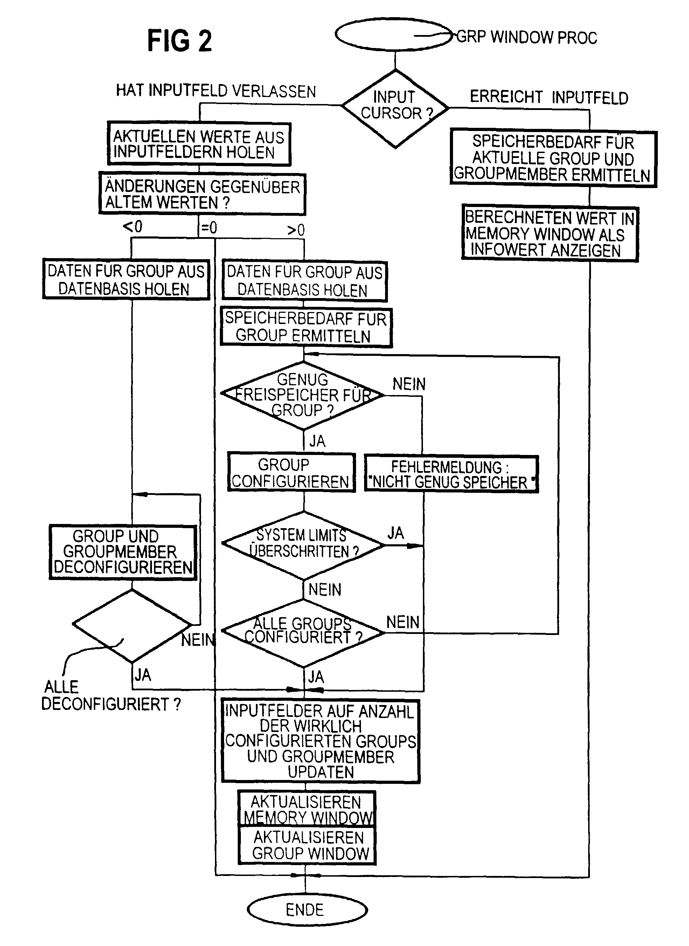

In der Figur 2 sind die wesentlichen Programmschritte eines Programmablaufs zur Anzeige eines Speicherplatzbedarfs der unter der Rubrik Gruppe zusammengefaßten Daten abgebildet. Der Speicherplatzbedarf der unter den anderen Rubriken zusammengefaßten Daten wird durch im wesentlichen gleich strukturierte Programmabläufe berechnet.

Nach dem Aufruf des Programmoduls GWP wird in einem ersten Programmschritt der Speicherbedarf aller Gruppenmitglieder ermittelt und an das Programmodul Memory Window MWP weitergegeben und als Informationswert beispielsweise auf einem Bildschirm angezeigt. Wird nun beispielsweise über ein Eingabefeld eine Änderung, Ergänzung oder Erweiterung eines Gruppenmitgliedes eingegeben, so wird der aktuelle Wert aus der Eingabedatei gelesen und gleichzeitig die aktuellen Werte aus den Inputfeldern abgerufen. In einem nachfolgenden Programmschritt wird überprüft, ob die Änderungen gegenüber dem vorhandenen Komponenten differiert. Bei einer Verringerung der vorhandenen Komponenten werden die Daten der Rubrik Gruppe aus der Datenbasis DA ausgelesen und die Gruppenmitglieder der Gruppe aus den Inputfeldern der tatsächlich konfigurierten Gruppenmitglieder auf den neuesten Stand gebracht. Nach Aktualisierung des Speichers des Anzeigefeldes werden die aktuellen Daten auf einem Segment RG des Bildschirms angezeigt.
Wird nun aufgrund einer Eingabe in das Inputfeld festgestellt, daß der Wert größer ist als die ursprüngliche Anzahl der Gruppenmitglieder, so wird, nachdem die Daten der Gruppe aus der Datenbasis ausgelesen wurden der gesamte Speicherplatzbedarf der Gruppe ermittelt. Nachdem festgestellt wurde ob genügend Speicherplatz für die gesamten Mitglieder der Gruppe vorhanden ist, wird diese Gruppe in der Kommunikationsanlage K eingerichtet. Eine zusätzliche Abfrage überwacht ein Überschreiten der Systemgrenzen der Kommunikationsanlage K. Bei nicht genügend Speicherplatz wird dies durch eine Fehlermeldung "Nicht genug Speicherplatz" dem Betreiber mitgeteilt. Nachdem alle Gruppen konfiguriert sind, wird der Fensterspeicher RG aktualisiert und auf dem Bildschirm sichtbar gesteuert angezeigt.

## Patentansprüche

1. Verfahren zur Berechnung der Speicherplatzauslastung einer rechnergesteuerten Kommunikationsanlage (K), wobei
- auf gespeicherte Datenstrukturbeschreibungen von Konfigurationselementen der Kommunikationsanlage (K) zugegriffen wird und
- auf der Grundlage der Datenstrukturbeschreibung und nach Maßgabe von Programmprozeduren die Speicherplatzauslastung ermittelt und sichtbar gesteuert angezeigt wird,
**dadurch gekennzeichnet**,
- daß nach Eingabe von kundenspezifischen Angaben in die Kommunikationsanlage (K) der noch freie Speicherplatz ermittelt und sichtbar gesteuert angezeigt wird,
- daß nach neu in die Kommunikationsanlage integrierten Hard- und Softwarekomponenten der noch freie Speicherplatz ermittelt und sichtbar gesteuert angezeigt wird,
- daß Hard- und Softwarekomponenten der Kommunikationsanlage nach charakteristischen Merkmalen in Rubriken (Rn) zusammengefaßt werden und
- daß der für eine Rubrik (R) vorgesehene und aktuell belegte Speicherplatz sichtbar gesteuert angezeigt wird.

2. Verfahren nach Anspruch 1,
**dadurch gekennzeichnet**,
daß die Datenstrukturdefinitionen in mindestens einer Inhaltsdatei (IV) der Datenbasis (DA) der Kommunikationsanlage (K) zusammengefaßt sind.

3. Verfahren nach einem der vorhergehenden Ansprüche,
**dadurch gekennzeichnet**,
daß über die Systemsoftware der Kommunikationsanlage (K) auf die Inhaltsdatei (IV) zugegriffen werden kann.

4. Verfahren nach einem der vorhergehenden Ansprüche,
**dadurch gekennzeichnet**,
daß bei Änderung der Anzahl einzelner Mitglieder in den Rubriken der bereitzustellende Speicherplatz sowie die aktuelle Speicherplatzauslastung sichtbar gesteuert angezeigt wird.

5. Verfahren nach einem der vorhergehenden Ansprüche,
**dadurch gekennzeichnet**,
daß mindestens eine Rubrik (Rn) für eine Kartenkonfiguration (RK), eine für eine Leistungsmerkmalekonfiguration (RL), eine für eine Gruppenkonfiguration (RG) sowie eine für eine Rufnummernplankonfiguration (RR) vorgesehen ist.

6. Verfahren nach einem der vorhergehenden Ansprüche,
**dadurch gekennzeichnet**,
daß jeder Rubrik mindestens ein Bildschirmsegment zugeordnet ist.

7. Verfahren nach Anspruch 6,
**dadurch gekennzeichnet**,
daß die im Bildschirmsegment abgebildete Mitgliederanzahl durch Eingabe verändert und der entsprechende Speicherplatz angezeigt wird.

8. Verfahren nach Anspruch 6 oder 7,
**dadurch gekennzeichnet**,
daß aufgrund einer Änderung in der Kommunikationsanlage (K), eine Änderung der Mitgliederanzahl automatisch in den bestreffenden Bildsegmenten angezeigt wird.

9. Verfahren nach einem der vorhergehenden Ansprüche,
**dadurch gekennzeichnet**,
daß zur bestehenden Konfiguration der Kommunikationsanlage (K) alternative Ausbauvariationen nach Maßgabe von Programmprozeduren angebbar sind.

## Claims

1. Process for calculating the storage capacity utilization of a computer-controlled communications system (K),
- access being made to stored data structure descriptions by configuration elements of the communications system (K), and
- the storage capacity utilization being determined, and displayed in a visibly controlled fashion, on the basis of the data structure description and in accordance with the program procedures, characterized
- in that the storage location which is still free is determined, and displayed in a visibly controlled fashion, after the inputting of customer-specific information into the communications system (K),
- in that the storage space which is still free is determined, and displayed in a visibly controlled fashion, after hardware and software components which have been newly integrated into the communications system,
- in that hardware and software components of the communications system are combined into rubrics (Rn) in accordance with characteristic features, and
- in that the storage space which is provided for a rubric (R), and actually occupied, is displayed in a visibly controlled fashion.

2. Method according to Claim 1, characterized in that the data structure definitions are combined into at least one content file (IV) of the database (DA) of the communications system (K).

3. Method according to one of the preceding claims, characterized in that access is made to the contents file (IV) via the system software of the communications system (K).

4. Method according to one of the preceding claims, characterized in that when the number of individual members in the rubrics changes, the storage space which is to be made available and the current storage capacity utilization are displayed in a visibly controlled fashion.

5. Method according to one of the preceding claims, characterized in that at least one rubric (Rn) is provided for a card configuration (RK), one for a performance feature configuration (RL), one for a group configuration (RG) and one for a call number scheme configuration (RR).

6. Method according to one of the preceding claims, characterized in that each rubric is assigned at least one screen sector.

7. Method according to Claim 6, characterized in that the number of members imaged in the screen sector is changed by inputting and the corresponding storage space is displayed.

8. Method according to Claim 6 or 7, characterized in that a change in the number of members owing to a change in the communications system (K) is displayed automatically in the respective image sectors.

9. Method according to one of the preceding claims, characterized in that alternative versions to the existing configuration of the communications system (K) can be stipulated in accordance with program procedures.

## Revendications

1. Procédé de calcul pour la charge d'emplacement de mémoire d'une installation de communication (K) commandée par ordinateur,
- avec accès à des descriptions enregistrées de la structure des données des éléments de configuration de l'installation de communication (K) et
- avec détermination, sur la base de la description de la structure des données et selon les procédures du programme, de l'occupation de l'emplacement de mémoire et avec son affichage en clair
**caractérisé par le fait**
- que, après entrée des indications spécifiques au client dans l'installation de communication (K), l'emplacement de mémoire, qui est encore libre, est déterminé et affiché en clair,
- que, après intégration nouvelle de constituants matériels et logiciels dans l'installation de communication, l'emplacement de mémoire, qui est encore libre, est déterminé et affiché en clair,
- que les constituants matériels et logiciels de l'installation de communication sont réunis suivant des attributs caractéristiques en rubriques (Rn) et
- que l'emplacement de mémoire prévu pour une rubrique (R) et actuellement occupé est affiché en clair.

2. Procédé selon la revendication 1
**caractérisé par le fait**
que les définitions de la structure des données sont réunies dans au moins un fichier répertoire (IV) de la base de données (DA) de l'installation de communication (K).

3. Procédé selon l'une des revendications précédentes
**caractérisé par le fait**
que l'on peut avoir accès au fichier répertoire (IV) par l'intermédiaire du logiciel système de l'installation de communication (K).

4. Procédé selon l'une des revendications précédentes
**caractérisé par le fait**
que, en cas de modification du nombre des différents membres dans les rubriques, l'emplacement de mémoire à mettre à disposition ainsi que l'occupation actuelle des emplacements de mémoire est affiché en clair.

5. Procédé selon l'une des revendications précédentes
**caractérisé par le fait**
que sont prévues au moins une rubrique (Rn) pour une configuration de carte (RK), une pour une configuration de possibilités d'exploitation (RL), une pour une configuration de groupe (RG) ainsi qu'une pour une configuration de plan de numéros d'appel (RR).

6. Procédé selon l'une des revendications précédentes
**caractérisé par le fait**
qu'à chaque rubrique est affecté au moins un segment du moniteur.

7. Procédé selon la revendication 6
**caractérisé par le fait**
que le nombre des éléments affichés sur le segment du moniteur est modifié par entrée et que l'emplacement de mémoire correspondant est affiché.

8. Procédé selon l'une des revendications 6 ou 7
**caractérisé par le fait**
que, à la suite d'une modification dans l'installation de communication (K), une modification du nombre d'éléments est automatiquement affichée dans les segments correspondants du moniteur.

9. Procédé selon l'une des revendications précédentes
**caractérisé par le fait**
qu'il est possible d'indiquer, pour la configuration existante de l'installation de communication (K), des alternatives d'extension selon les procédures de programme.
